(19) Europäisches Patentamt
European Patent Office
Office européen des brevets

(11) **EP 4 009 465 A1**

(12) **EUROPEAN PATENT APPLICATION**

(43) Date of publication:
**08.06.2022 Bulletin 2022/23**

(21) Application number: **21275160.6**

(22) Date of filing: **17.11.2021**

(51) International Patent Classification (IPC):
**H02J 3/00** (2006.01)          **H02J 3/14** (2006.01)

(52) Cooperative Patent Classification (CPC):
**H02J 3/003; H02J 3/14**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.12.2020 NO 20201333**

(71) Applicant: **Sikom Connect AS
7010 Trondheim (NO)**

(72) Inventor: **Tande Hovdsveen, Øyvind
7010 Trondheim (NO)**

(74) Representative: **Lincoln, Matthew
Lincoln IP
4 Rubislaw Place
Aberdeen AB10 1XN (GB)**

(54) **METHODS AND SYSTEMS RELATING TO THE REGULATION OF ELECTRICAL POWER CONSUMPTION**

(57)     The invention in one aspect provides a method of and system for regulating electrical power consumption of a location comprising one or more regulatable loads. The method comprises estimating a future electrical power consumption value by receiving electrical power consumption measurements from a plurality of time intervals over a tuning period, deriving an indicative electrical power consumption value corresponding to the tuning period from the electrical power consumption measurements and calculating a proportional and derivative value of the indicative electrical power consumption value. The available capacity for electrical power consumption is determined using the future electrical power consumption value and an electrical power consumption limit. A control signal for controlling the one or more regulatable loads to regulate electrical power consumption of the system is generated. The system comprises a data processing unit configured to carry out the method.

Fig. 6

**Description**

The present invention relates to methods of and systems for regulating electrical power consumption. In particular, the invention relates to methods for reducing or shifting peak electrical power consumption and/or shifting electrical power consumption to low cost and/or low demand periods. Aspects of the invention relate to determining and/or setting a power consumption limit for regulation.

Background to the invention

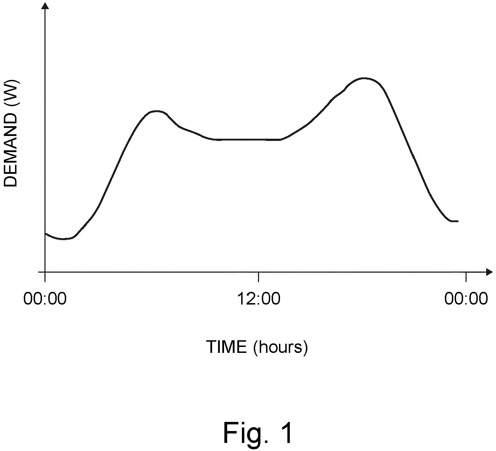

At times - for example, when electrical power demand nears or exceeds supply - electrical power distribution grids can experience, or be brought close to, overload. These times generally tend to correspond to patterns in the population's daily schedules; however, they can also be one off occurrences due to scheduled events or otherwise, which somehow result in a surge in demand. Figure 1 is a schematic plot of typical electrical demand over a period of 24 hours (one day), which shows that demand typically tends to peak during the busy morning and evening periods.

The tariffs offered by energy providers typically tend to reflect the times of times of peak consumption, as electrical power is also sold at varying prices throughout the day. In line with demand, it is often the case that electricity is cheaper to use during the night, and more expensive during the day.

To combat the above, manual and automatic control of electrical power systems can be employed to shift consumption in time to reduce peak demand and/or consumption, which can be done during high cost periods. The availability of power can also be increased locally - for example, by generators - and/or by utilising energy storage means.

US 8,494,685 describes a system and method for utilising predictive energy consumption which can begin to initiate heating (or cooling) of a room to a maximum (or minimum) temperature so that the room reaches its maximum (or minimum) temperature at approximately the same time that a peak in consumption occurs.

It is desirable to shift electrical power consumption to times of lower demand, to control consumption levels and thereby reduce the overall load on the electrical grid, in a bid to avoid the possibility of overloading the system. It is also desirable to employ such methods to avoid consuming electricity during peak tariff periods, to similarly lessen the load on the grid.

Summary of the invention

There is generally a need for a method and apparatus which addresses one or more of the problems identified above.

It is amongst the aims and objects of the invention to provide a method for regulating electrical power consumption of a system which avoids over-regulation of appliances in the system and which can be applied to a wide variety of systems without special adjustments.

It is amongst the aims and objects of the invention to provide a method for regulating electrical power consumption which is an alternative to the prior art and/or which obviates or mitigates one or more drawbacks or disadvantages of the prior art.

It is amongst the aims and objects of the invention to provide a method for predicting the occurrence of excessive electrical power consumption which is an alternative to the prior art and/or which obviates or mitigates one or more drawbacks or disadvantages of the prior art.

It is amongst the aims and objects of the invention to provide a method for reducing and/or shifting peak electrical power consumption which is an alternative to the prior art and/or which obviates or mitigates one or more drawbacks or disadvantages of the prior art.

In particular, one aim of an aspect of the invention is to provide a method for regulating electrical power consumption to a power consumption limit, whilst avoiding regulation due to short surges in power consumption.

A further aim of an aspect of the invention is to provide a method for determining the power consumption limit to which electrical power consumption is regulated.

Throughout this specification, the terms appliance, device and/or load are used interchangeably to refer to a load within an electrical system. These loads may be able to be regulated (regulatable) or may not be able to be regulated (not regulatable). Whether loads are regulatable or not regulatable may be a factor based on the nature of the load in question, or it may be a decision made according to a user of the system and/or may be according to the priority and/or use of the loads.

Throughout this specification, regulation refers to the cessation and/or reduction of electrical power provided to one or more loads (otherwise interchangeably referred to as a device and/or an appliance) and/or to the resumption and/or increase of electrical power provided to one or more loads.

According to a first aspect of the invention, there is provided a method for regulating electrical power consumption of a system comprising one or more regulatable loads, the method comprising:

estimating a future electrical power consumption value by:

a) receiving electrical power consumption measurements from a plurality of time intervals over a tuning period;
b) deriving an indicative electrical power consumption value corresponding to the tuning period from the electrical power consumption measurements; and
c) calculating a proportional and derivative value of the indicative electrical power consumption value;

determining an available capacity for electrical power consumption using the future electrical power consumption value and an electrical power consumption limit; and generating a control signal for controlling the one or more regulatable loads to regulate electrical power consumption of the system.

Deriving an indicative electrical power consumption value corresponding to the tuning period from the electrical power consumption measurements (step b) may comprise processing the measurements to produce a value or values which are representative of the power consumption over the tuning period.

Deriving an indicative electrical power consumption value corresponding to the tuning period from the electrical power consumption measurements (step b) may comprise filtering the electrical power consumption measurements.

Deriving an indicative electrical power consumption value corresponding to the tuning period from the electrical power consumption measurements (step b) may comprise calculating the average of the electrical power consumption measurements over the tuning period and, as such, step c may comprise calculating a proportional and derivative value of the average.

Deriving an indicative electrical power consumption value corresponding to the tuning period from the electrical power consumption measurements (step b) may comprise exponentially filtering the measurements.

Deriving an indicative electrical power consumption value corresponding to the tuning period from the electrical power consumption measurements (step b) may comprise calculating one or more percentiles of the measurements.

Deriving an indicative electrical power consumption value corresponding to the tuning period from the electrical power consumption measurements (step b) may comprise calculating a weighted average of the measurements.

Deriving an indicative electrical power consumption value corresponding to the tuning period from the electrical power consumption measurements (step b) may comprise a combination of processing, filtering and/or calculation steps, such as those described above.

The method for regulating electrical power consumption of a system may be configured to do so in a measured manner, which avoids over-regulating of the system and/or triggering regulation as a result of high demand which lasts for only a short duration relative to the tuning period.

The method may be performed by a computer. The method may be performed by a processing unit.

The control signal generated may be based on the available capacity for electrical power consumption. The method may comprise controlling the one or more regulatable loads to regulate electrical power consumption of the system. This may be based on the available capacity for electrical power consumption. The method may comprise receiving the control signal in a local controller and operating the local controller to control the one or more regulatable loads to regulate electrical power consumption of the system in response to the signal.

The future electrical power consumption value may be estimated at a time, T.

The step of estimating a future electrical power consumption value may be the step of estimating a first future electrical power consumption value at a first time, $T_1$, which may comprise obtaining electrical power consumption measurements from a plurality of time intervals over a first tuning period.

The method may comprise repeating the step of estimating a future electrical power consumption value at a later time. The method may comprise repeating the step of estimating a future electrical power consumption value at a plurality of later times, to estimate multiple future electrical power consumption values (for example, on the reception of each new power consumption measurement at a next time interval.). The time between repeating the estimation of a future electrical power consumption value may be regular time intervals and/or may be an irregular time intervals.

The method may comprise estimating a second future electrical power consumption value at a time $T_2$, later than the time $T_1$, which may comprise obtaining electrical power consumption measurements from a plurality of time intervals over a second tuning period. The second tuning period may partly or wholly overlap the first tuning period. The second tuning period may contain all or some of the first tuning period.

The method may comprise estimating a third future electrical power consumption value at a time $T_3$, later than the time $T_2$, which may comprise obtaining electrical power consumption measurements from a plurality of time intervals over a third tuning period. The third tuning period may partly or wholly overlap the second and/or the first tuning period. The third tuning period may contain all or some of the second and/or the first tuning period.

The method may comprise repeating the steps above to estimate a fourth electrical power consumption value and so on.

Taking a tuning period of one hour where electrical power consumption measurements are obtained every minute (such that within a tuning period of one hour, sixty electrical power consumption measurements are obtained) for example. If $T_1$ is 15:00 then electrical power consumption measurements from 14:01 to 15:00 may be obtained to estimate a first future electrical power consumption value. If $T_2$ is 15:01 then electrical power consumption measurements from 14:02 to 15:01 may be obtained to estimate a future electrical power consumption value at $T_2$ and so on. It will be appreciated that different tuning periods and intervals between measurements and estimations may be used.

The electrical power consumption limit may be a calculated. The electrical power consumption limit may be a calculated using a computer, a processor or any other suitable means for performing the calculation. The electrical power consumption limit may be calculated by an algorithm and used as an input for determining the available capacity for electrical power. The electrical power consumption limit may be calculated automatically by an algorithm, which may run to calculate the electrical power consumption limit at intervals. The electrical power consumption limit may be determined according to any of the eighth to eleventh aspects of the invention. The method may comprise calculating the electrical power consumption limit.

Alternatively, or in addition, the electrical power consumption limit may be an external input, which may be provided by an external signal. The electrical power consumption limit may be based on peak consumption and/or demand. The electrical power consumption limit may be based on tariff rates. The electrical power consumption limit may be determined by the power supplier/provider such as a national grid.

The electrical power consumption limit may be determined by any of the eighth to eleventh aspects of the invention.

A system user, electrical power provider, national authority and/or any other relevant person or body associated with the system may be able to input a set or selected electrical power consumption limit.

If the available capacity for electrical power consumption is a negative value, this may indicate that the value representative of future electrical power consumption exceeds the electrical power consumption limit. The method may comprise identifying regulatable loads which are not yet regulated and may comprise regulating and/or sending a control signal to regulate one or more of the identified regulatable loads.

The method may comprise producing and/or keeping a record, list, database or otherwise of loads which are regulatable. This may be done using a computer, a processor, or any other suitable means. The method may comprise producing and/or keeping a record, list, database or otherwise which may contain load regulation and un-regulation values for each of the regulatable loads. The load regulation and un-regulation values may be electrical power consumption values (W) relating to each of the regulatable loads within the system. The load regulation and un-regulation values may be estimated values. The record, list, database or otherwise may contain information relating to the expected electrical power consumption change due to regulation of each regulatable load.

The method may comprise the step of assigning priorities to the regulatable loads. This may be done using a computer, a processor, or any other suitable means. The priorities assigned to regulatable loads may determine the order in which the loads are selected for regulation. The priorities assigned to regulatable loads may also determine the order in which loads are selected for un-regulation. High priority regulatable loads may be the last to be regulated and may be the first to be un-regulated. Low priority regulatable loads may be the first to be regulated and the last to be un-regulated. The method may comprise the step of regulating low priority loads before high priority loads. The method may comprise the step of un-regulating high priority loads before low priority loads.

The method may comprise the step of determining at what time (approximately or exactly) negative capacity for electrical power consumption is expected to occur. The method may comprise identifying regulatable loads which are not yet regulated and increasing the electrical power consumption of one or more of the identified regulatable loads prior to the expected occurrence of negative capacity for electrical power consumption. The method may comprise regulating one or more of the identified regulatable loads when the negative capacity for electrical power consumption is expected to occur.

The method may comprise determining the start time (approximately or exactly) at which a high price tariff period begins. The method may comprise identifying regulatable loads which are not yet regulated and increasing the electrical power consumption of one or more of the identified regulatable loads prior to the start time of the high tariff period. The method may comprise regulating one or more of the identified regulatable loads when the high tariff period begins.

The step of estimating a future electrical power consumption may include one or more of the features or steps according to the seventh aspect of the invention.

According to a second aspect of the invention, there is provided a method for regulating electrical power consumption of a system comprising one or more regulatable loads, the method comprising:

estimating a future electrical power consumption value by:

- obtaining electrical power consumption measurements from a plurality of time intervals over a tuning period;
- deriving an indicative electrical power consumption value corresponding to the tuning period from the electrical power consumption measurements; and
-    calculating a proportional and derivative value of the indicative electrical power consumption value;

determining an available capacity for electrical power consumption using the future electrical power consumption value and an electrical power consumption limit; and based on the available capacity for electrical power consumption, controlling the one or more regulatable loads to regulate electrical power consumption of the system.

Embodiments of the second aspect of the invention may include one or more features of the first aspect of the invention, or its embodiments, or vice versa.

According to a third aspect of the invention, there is provided a system for regulating electrical power consumption of a location comprising one or more regulatable loads, the system comprising:
a data processing unit operable to send a control signal to a local controller operable to control the one or more regulatable loads;
wherein the data processing unit is configured to:

estimate a future electrical power consumption value by:

-    receiving electrical power consumption measurements of the location from a plurality of time intervals over a tuning period;
-    deriving an indicative electrical power consumption value corresponding to the tuning period from the electrical power consumption measurements; and
-    calculating a proportional and derivative value of the indicative electrical power consumption value;

determine the available capacity for electrical power consumption of the location using the future electrical power consumption value and an electrical power consumption limit; and
send a control signal to the local controller to control the one or more regulatable loads to regulate electrical power consumption of the location.

The system may comprise the local controller operable to control the one or more regulatable loads. The local controller may be operable to receive the control signal from the data processing unit and control the one or more regulatable loads in response to the control signal.
The data processing unit may be a remote data processing unit. The data processing unit may be configured to receive data relating to electrical power consumption of the location.
The location may be a building, such as a home or an office.
The data relating to electrical power consumption may be data relating to current, past and/or accumulated power and/or energy consumption. The data relating to electrical power consumption may be electrical power consumption measurements of the location.
The data processing unit may be configured to receive data relating to electrical power consumption of the location from the local controller. The data processing unit may be configured to receive the electrical power consumption measurements of the location from the local controller.
The data processing unit may be cloud-based (i.e. hosted on the internet). The data processing unit may communicate with one or more devices, appliances and/or the local controller in the location (and vice versa) to receive the data relating to electrical power consumption of the location and/or to control the one or more regulatable appliances. The data processing unit may communicate with the one or more devices, appliances and/or the local controller in the location (and vice versa) using a wireless communication protocol.
The data processing unit may be connected to and/or may communicate with an electricity meter in the location (and vice versa). The local controller may be connected to the electricity meter and the data processing centre may be connected to and/or communicate with the electricity meter via the local controller. The electricity meter may be configured to send data relating to electrical power consumption of the location to the local controller and/or the data processing unit. The local controller may be operable to collect data relating to electrical power consumption of the location from the meter and/or may be operable to send data relating to electrical power consumption of the location to the data processing unit.
The data processing unit may comprise database(s) for storing the data and/or may be operable to execute one or more algorithms. The algorithms may be those according to any of the first, second, and sixth to twelfth aspects of the invention.
The one or more regulatable appliances may include relays (including but not limited to relays for water heaters) and/or thermostats (including but not limited to thermostats for heaters and/or underfloor heating). The data processing unit may communicate with the one or more regulatable appliances (and vice versa) using a wireless communication protocol.

A system user may be able to monitor and/or have input into and/or control the system's analysis, decisions and/or outcomes and may be able to monitor the regulatable appliances being controlled by the system. This may be done via a user interface. The user interface may be hosted on an application and/or a webpage which may be accessed using a computer, which may be a mobile appliance such as a tablet or a smartphone. The data processing unit may communicate with the user interface (and vice versa) and regulatable appliances using a wireless communication protocol.

Embodiments of the third aspect of the invention may include one or more features of the first and/or second aspects of the invention, or their embodiments, or vice versa.

According to a fourth aspect of the invention, there is provided an installation for regulating electrical power consumption of a location, the installation comprising:

> a system according to a third aspect of the invention;
> one or more regulatable appliances associated with the location; and
> a local controller operable to control the one or more regulatable appliances.
> wherein the local controller is operable to receive a control signal from the data processing unit to control the one or more regulatable to regulate electrical power consumption of the location.

Embodiments of the fourth aspect of the invention may include one or more features of the first to third aspects of the invention or their embodiments, or vice versa.

According to a fifth aspect of the invention, there is provided a system for regulating electrical power consumption of a location comprising one or more regulatable loads, the system comprising:

> a data processing unit configured to receive data relating to electrical power consumption of the location;
> a local controller operable to control the status of one or more regulatable loads; and wherein the data processing unit is configured to perform the methods according to any of the first, second, and sixth to twelfth aspects of the invention; and wherein the data processing unit is operable to send a control signal to the local controller to control the one or more regulatable appliances associated with the location.

Embodiments of the fifth aspect of the invention may include one or more features of the first to fourth aspects of the invention or their embodiments, or vice versa.

According to a sixth aspect of the invention, there is provided a method for regulating electrical power consumption of a system, the method comprising:

> estimating a future electrical power consumption value according to a seventh aspect of the invention;
> obtaining an electrical power consumption limit; and
> determining the available capacity for electrical power consumption according to a twelfth aspect of the invention.

If the available capacity for electrical power consumption is a negative value, the method may comprise identifying regulatable loads within the system which are not yet regulated, and may comprise regulating one or more of the identified regulatable loads.

The electrical power consumption limit may be determined according to any of the eighth to eleventh aspects of the invention. Alternatively, or in addition, the electrical power consumption limit may be provided to the system by an external means, which may be done using an external signal. The electrical power consumption limit may be based on peak consumption and/or demand.

When the available capacity for electrical power consumption is a negative value, this may indicate that the estimated future electrical power consumption value exceeds the electrical power consumption limit.

The method for regulating electrical power consumption may be used to avoid and/or reduce consumption of electrical power at peak periods of consumption and/or demand. These periods may correspond to tariffs which may centre around peak consumption. The method for regulating electrical power consumption may be used to avoid overconsumption of electrical power and thus to avoid brownouts and/or blackouts.

The method for regulating electrical power consumption may be used to avoid consumption of electrical power at certain tariff rates (for example, at higher tariff rates). The electrical power consumption limit may be based on tariff rates.

The method may comprise producing and/or keeping a record, list, database or otherwise of loads which are regulatable. The method may comprise producing and/or keeping a record, list, database or otherwise which may contain load regulation and un-regulation values for each of the regulatable loads. The load regulation and un-regulation values may be electrical power consumption values (W) relating to each of the regulatable loads within the system. The load regulation and un-regulation values may be estimated values. The record, list, database or otherwise may contain information relating to the expected electrical power consumption change due to regulation of each regulatable load.

The method may comprise the step of assigning priorities to the regulatable loads. The priorities assigned to regulatable loads may determine the order in which the loads are selected for regulation. The priorities assigned to regulatable loads may also determine the order in which loads are selected for un-regulation. High priority regulatable loads may be the last to be regulated and may be the first to be un-regulated. Low priority regulatable loads may be the first to be regulated and the last to be un-regulated. The method may comprise the step of regulating low priority loads before high priority loads. The method may comprise the step of un-regulating high priority loads before low priority loads.

The method may comprise the step of determining at what time (approximately or exactly) negative capacity for electrical power consumption is expected to occur. The method may comprise identifying regulatable loads which are not yet regulated and increasing the electrical power consumption of one or more of the identified regulatable loads prior to the expected occurrence of negative capacity for electrical power consumption. The method may comprise regulating one or more of the identified regulatable loads when the negative capacity for electrical power consumption is expected to occur.

The method may comprise determining the start time (approximately or exactly) at which a high price tariff period begins. The method may comprise identifying regulatable loads which are not yet regulated and increasing the electrical power consumption of one or more of the identified regulatable loads prior to the start time of the high tariff period. The method may comprise regulating one or more of the identified regulatable loads when the high tariff period begins.

Embodiments of the sixth aspect of the invention may include one or more features of the first to fifth aspects of the invention or their embodiments, or vice versa.

According to a seventh aspect of the invention, there is provided a method for regulating electrical power consumption of a system, the method comprising:

estimating a future electrical power consumption value by:

    a) obtaining electrical power consumption measurements from a plurality of time intervals over a tuning period;
    b) deriving an indicative electrical power consumption value corresponding to the tuning period from the electrical power consumption measurements; and
    c) calculating a proportional and derivative value of the indicative electrical power consumption value.

The future electrical power consumption value may be estimated at a time, $T_1$. The step of estimating a future electrical power consumption value may be the step of estimating a first future electrical power consumption value which may comprise obtaining electrical power consumption measurements from a plurality of time intervals over a first tuning period. The method may comprise estimating more than one future electrical power consumption value (for example, on the reception of each new power consumption measurement at a next time interval.). The method may comprise estimating a second future electrical power consumption value at a time $T_2$, later than the time $T_1$, which may comprise obtaining electrical power consumption measurements from a plurality of time intervals over a second tuning period. The second tuning period may wholly or partially overlap the first tuning period.

The tuning period may be a set period of time. The electrical power consumption measurements may be obtained at regular set time intervals within the period of time. For example, the electrical power consumption measurements may be obtained every minute such that within a tuning period of one hour, sixty electrical power consumption measurements may be obtained. It will be appreciated that alternative time periods may be used, and similarly that alternative time intervals within this or alternative time periods may be employed.

Deriving an indicative electrical power consumption value corresponding to the tuning period from the electrical power consumption measurements (step b) may comprise processing the measurements to produce a value or values which are representative of the power consumption over the tuning period.

Deriving an indicative electrical power consumption value corresponding to the tuning period from the electrical power consumption measurements (step b) may comprise filtering the electrical power consumption measurements.

Deriving an indicative electrical power consumption value corresponding to the tuning period from the electrical power consumption measurements (step b) may comprise calculating the average of the electrical power consumption measurements over the tuning period and, as such, step c may comprise calculating a proportional and derivative value of the average.

Deriving an indicative electrical power consumption value corresponding to the tuning period from the electrical power consumption measurements (step b) may comprise exponentially filtering the measurements.

Deriving an indicative electrical power consumption value corresponding to the tuning period from the electrical power consumption measurements (step b) may comprise calculating one or more percentiles of the measurements.

Deriving an indicative electrical power consumption value corresponding to the tuning period from the electrical power consumption measurements (step b) may comprise calculating a weighted average of the measurements.

As each new iteration of the method is performed by repeating the step of estimating a future electrical power consumption value (i.e repeating steps a) to c)), which may be on the reception of each new power consumption measurement at a next time interval), if step b) comprises calculating the average of the electrical power consumption measurements over the tuning period then the average calculated in step b) may become what is known as a sliding average or a moving average.

The method may include a step of exponentially smoothing the indicative electrical power consumption value or values determined in step b) of the method. The step of exponentially smoothing the indicative electrical power consumption value or values may be an interim step, which may be conducted between steps b) and c) of the method. Therefore, step c) may comprise calculating the proportional derivative value of the exponentially smoothed indicative electrical power consumption value or values. If step b) comprises calculating the average of the electrical power consumption measurements over the tuning period then the step of exponentially smoothing the indicative electrical power consumption value or values may comprise exponentially smoothing the average. The step of exponentially smoothing the indicative electrical power consumption value or values is advantageous because it dampens changes in the power consumption measurements, letting only trends pass through. Anything but the trends in the data are substantially filtered out. This is beneficial because it helps to mitigate unnecessary regulation that may otherwise occur due to small changes between measurements that may be amplified in the derivative calculations performed as a part of step c). This step therefore helps the system to avoid triggering regulation due to the occurrence of short peaks in consumption.

The method may comprise the step of generating a feed forward value which is a value that is indicative of known and/or expected changes in future consumption due to the regulation and/or un-regulation of one or more loads. This step may be step d) in the method.

The feed forward value may be based on a sum of known and/or expected changes in consumption which may take place at a known or estimated time due to the regulation and/or un-regulation of one or more loads. To obtain the feed forward value the method may comprise the step of referring to a list, record, database or otherwise containing load regulation and un-regulation data. The data contained by the list, record, database or otherwise may be load regulation and un-regulation values for each of the regulatable loads. The load regulation and un-regulation values may be electrical power consumption values (W) relating to each of the regulatable loads within the system. The load regulation and un-regulation values may be estimated values. The record, list, database or otherwise may contain information relating to the expected electrical power consumption change due to regulation of each regulatable load.

The method may comprise adding and/or subtracting the values corresponding to known and/or expected consumption changes to and/or from the feed forward value.

The method may comprise exponentially decaying the feed forward value.

The feed forward value allows the estimation to react quickly and pre-empt known or estimated changes, by not having to wait for known changes in consumption to actually occur, be measured and processed by the system.

The method may comprise exponentially decaying the feed forward value by a time constant. The method may comprise exponentially decaying the feed forward value by multiplying it with a value less than 1 at every time interval. The inventors have realised that decaying the feed forward value gradually removes errors from it, thereby reducing the accuracy required for the feed forward value. A coarse learning model to determine the feed forward value is therefore sufficient. This also allows the effects of the regulation of appliances having complex electrical power consumption patterns - for example, a pulse width modulated thermostat - to be estimated and incorporated into the system calculations without having to make special considerations for these appliances. In addition, by decaying the feed forward value the feed forward value is decreased as the measurements resulting from the regulation or un-regulation of an electrical load actually appear. By exponentially decaying the feed forward value, the system can react in advance to known changes and remove errors from the feed forward value.

The method may comprise the step of combining the proportional and derivative value (calculated at step c) of the method) and the feed forward value (calculated at step d) of the method) to produce a proportional and derivative value which is representative of the future electrical power consumption value and which reflects known and/or expected changes in future consumption due to the regulation and/or un-regulation of one or more loads within the system. This step may be step e) in the method.

The method may comprise the step of obtaining and/or calculating an upper bound value. This step may be step f) in the method.

The upper bound value may be determined by calculating multiple sliding averages of the electrical power consumption measurements for periods of time shorter than the tuning period (i.e. over which the average in step b) is calculated). The shorter periods of time may be progressively one interval shorter than the last. For example, the first shorter period of time may be the tuning period minus one interval. The second shorter period of time may be the first shorter period of time minus one interval, and so on. For example, where the tuning period is one hour, the shorter periods of time may be 59 minutes, 58 minutes, 57 minutes and so on. The highest of these averages may be selected. The upper bound value may be determined as the maximum value of:

> 1) an electrical power consumption limit for the system to be regulated, or

2) the highest average value of the electrical power consumption over a period of time shorter than the tuning period.

The inventors have appreciated that use of an upper bound value in the method beneficially allows short, non-repeating periods of high electrical consumption (i.e. those which have not been short enough to be dampened by any filters, including averaging and any exponential smoothing which may be been applied) to occur without triggering regulation, and therefore protecting appliances within the system from wear and tear. By using an upper bound value, short periods of high consumption may be stopped from triggering regulation.

The method may comprise the step of selecting either of the values calculated in steps e) (i.e. the combination of the proportional and derivative value and the feed forward value) or f) (i.e. the upper bound value) to represent the final estimated future electrical power consumption value for the system. This step may be step g) in the method.

The method may comprise repeatedly estimating a future electrical power consumption value (i.e. which may be done by repeating steps a) to g)), which may be done on the reception of each new power consumption measurement at a next time interval.

As each new iteration of the method is performed (i.e. by repeating steps a) to g) on the reception of each new power consumption measurement at a next time interval), the average calculated in step b) may become what is known as a sliding average or a moving average.

Embodiments of the seventh aspect of the invention may include one or more features of the first to sixth aspects of the invention or their embodiments, or vice versa.

According to an eighth aspect of the invention, there is provided a method for regulating electrical power consumption of a system, the method comprising:

determining an electrical power consumption limit, comprising:

obtaining electrical power consumption measurements from a plurality of time intervals over a period of time;
identifying a plurality of the highest electrical power consumption measurements during the period of time;
calculating the average value of the plurality of the highest electrical power consumption measurements; and
dividing the average value by an aggressiveness constant, wherein the aggressiveness constant is a value proportional to the amount of regulation required,
to determine the electrical power consumption limit; and

using the electrical power consumption limit in the regulation of the electrical power consumption of the system.

The period of time may be a set period of time.

The aggressiveness constant may be related to the aggressiveness (i.e. the amount or degree) of the regulation desired. A higher value aggressiveness constant may be proportional to a more aggressive (i.e. lower) power consumption limit. A lower value aggressiveness constant may be proportional to a less aggressive (i.e. higher) power consumption limit. The aggressiveness constant may have a value of between 1.00 and 1.10. For aggressive tuning, the aggressiveness constant may be a value from 1.05 to 1.10. For aggressive tuning, the aggressiveness constant may be 1.10. For less aggressive tuning, the aggressiveness constant may a value from 1.00 to 1.05. For less aggressive tuning, the aggressiveness constant may be 1.02. It will be appreciated that although aggressiveness constants in the order of 1 are described, any order of constant may be used by the system. Similarly, the difference between relative aggressiveness constants may be larger or smaller than that described.

The plurality of the highest electrical power consumption measurements may comprise any number of the highest electrical power consumption measurements. For example, it may comprise five of the highest measurements.

The power consumption limit may be calculated or revised at regular time intervals. Alternatively, or in addition, the power consumption limit may be calculated or revised when the system satisfies certain requirements. For example, the power consumption limit may be calculated when regulation has been in place for a minimum duration of time. It will be appreciated that the system may be set to determine a power consumption limit based on any factor, at any time, as may be desired by the system user.

Embodiments of the eighth aspect of the invention may include one or more features of the first to seventh aspects of the invention or their embodiments, or vice versa.

According to a ninth aspect of the invention, there is provided a method for regulating electrical power consumption of a system, the method comprising:

determining an electrical power consumption limit, comprising:

obtaining electrical power consumption measurements from a plurality of set time intervals over a period of time;
determining the average value of electrical power consumption measurements within a percentile or percentile range of all measurements over the period of time, wherein the percentile or percentile range selected is proportional to the amount of regulation required, to determine the electrical power consumption limit; and

using the electrical power consumption limit in the regulation of the electrical power consumption of the system.

A lower percentile or percentile range may be proportional to a more aggressive (i.e. lower) power consumption limit. A higher percentile may be proportional to a less aggressive (i.e. higher) power consumption limit. The percentile or percentile range may be a percentile or percentile range between the 95th and 100th percentile. For aggressive tuning, the percentile may be the 97th percentile. For less aggressive tuning, the percentile may be the 99th percentile.

Embodiments of the ninth aspect of the invention may include one or more features of the first to eighth aspects of the invention or their embodiments, or vice versa.

According to a tenth aspect of the invention, there is provided a method for regulating electrical power consumption of a system, the method comprising:

determining a current electrical power consumption limit of the system;
determining a revised electrical power consumption limit, comprising:

determining a lower threshold time;
determining whether electrical power has been regulated for a continuous period of time greater than the lower threshold time;
determining the maximum length of time for which continuous regulation has been ongoing;
where electrical power has been regulated for a continuous period of time greater than the lower threshold value, calculating a value proportional to the time in which power regulation has been ongoing continuously from the maximum length of time for which continuous regulation has been ongoing and the lower threshold time; and calculating the revised electrical power consumption limit using the current electrical power consumption limit and the value proportional to the time in which power
regulation has been ongoing continuously; and

using the revised electrical power consumption limit in the regulation of the electrical power consumption of the system.

The method may comprise determining an upper threshold time. The value of the maximum length of time for which continuous regulation has been ongoing may be capped at the upper threshold time.

The value proportional to the time in which power regulation has been ongoing continuously may be determined using the following formula:

$$1 + T * (t_c - t_l)$$

Where:

T = aggressiveness constant value proportional to the amount of regulation required;
$t_c$ = time in which regulation has been ongoing continuously (h); and
$t_l$ = lower threshold time (h).

Although the above times are said to be in hours, it will be appreciated that different units of time may be used.

A higher aggressiveness constant T may be proportional to a less aggressive (i.e. higher) power consumption limit. A lower aggressiveness constant T may be proportional to a more aggressive (i.e. lower) power consumption limit.

Embodiments of the tenth aspect of the invention may include one or more features of the first to ninth aspects of the invention or their embodiments, or vice versa.

According to a eleventh aspect of the invention, there is provided a method for regulating electrical power consumption of a system, the method comprising:

determining an electrical power consumption limit for the system, comprising:

a) determining an electrical power consumption limit according to the method of the eighth aspect of the invention;
b) determining an electrical power consumption limit according to the method of the tenth aspect of the invention; and

c) selecting the highest value of the two electrical power consumption limits calculated from steps (a) and (b) above to be the electrical power consumption limit for the system; and

using the electrical power consumption limit in the regulation of the electrical power consumption of the system.

Embodiments of the eleventh aspect of the invention may include one or more features of the first to tenth aspects of the invention or their embodiments, or vice versa.

According to an twelfth aspect of the invention, there is provided a method for regulating electrical power consumption of a system, the method comprising:

determining the available capacity for electrical power consumption, comprising:

estimating a future electrical power consumption value according to the seventh aspect of the invention;
obtaining an electrical power consumption limit; and
calculating the difference between the electrical power consumption limit and the future electrical power consumption value to determine the available capacity for
electrical power consumption; and

using the available capacity for electrical power consumption in the regulation of the electrical power consumption of the system.

The electrical power consumption limit may be determined according to any of the eighth to eleventh aspects of the invention. Alternatively, or in addition, the electrical power consumption limit may be provided to the system by an external means, which may be done using an external signal. The electrical power consumption limit may be based on peak consumption and/or demand.

If the available capacity for electrical power consumption is a negative value, this indicates overconsumption. If the available capacity for electrical power consumption is a positive value this indicates that more electrical power consumption capacity is available before overconsumption occurs.

Embodiments of the twelfth aspect of the invention may include one or more features of the first to eleventh aspects of the invention or their embodiments, or vice versa.

According to a thirteenth aspect of the invention, there is provided a system for regulating electrical power consumption, the system configured to perform the methods disclosed in any of the first, second and/or sixth to twelfth aspects of the invention.

Some or all of the methods performed by the system, which may include the steps of data management, processing and/or calculations, may be performed remotely to the system being regulated and/or remotely from one another.

Embodiments of the thirteenth aspect of the invention may include one or more features of the first to twelfth aspects of the invention or their embodiments, or vice versa.

Brief description of the drawings

There will now be described, by way of example only, various embodiments of the invention with reference to the drawings, of which:

Figure 1 is a schematic plot of the typical electrical power demand over a period of one day;

Figure 2 is a schematic flow diagram which provides an overview of how the system algorithm estimates the occurrence of overconsumption according to an embodiment of the invention;

Figure 3 is a schematic flow diagram which provides an overview of how the system algorithm produces an estimation of future electrical power consumption according to an embodiment of the invention;

Figure 4 is a schematic flow diagram which provides an overview of how the system algorithm calculates a power consumption limit according to an embodiment of the invention;

Figure 5 is a schematic flow diagram which provides an overview of how the system algorithm calculates a power consumption limit according to an alternative embodiment of the invention;

Figure 6 is a schematic flow chart which provides an overview of how the system implements regulation according to an embodiment of the invention;

Figure 7A and 7B are plots of the electrical power consumption of an unregulated system and a regulated system according to an embodiment of the invention, respectively; and

Figure 8A and 8B are plots of the electrical power consumption of an unregulated system and a regulated system according to an embodiment of the invention, respectively, respectively.

Detailed description of preferred embodiments

As described above, Figure 1 is a schematic plot of the typical electrical power demand over a period of one day. A primary objective of the invention is to provide a system and methods for regulating the electrical power consumption of a system to reduce and/or shift peak consumption or to shift consumption to low cost periods, without the need to use electrical power storage and/or to increase electrical power production or utilise alternative or local sources of power. However, it is not concerned with providing perfect, tailored and system-specific regulation, nor is it concerned with spending time learning about the complexities of the specific system to which regulation is applied. Instead, the system and methods described herein provide an imperfect, pragmatic, standardised approach, which can be used in a wide variety of circumstances and applied to a multitude of systems without extensive pre-configuration. Moreover, embodiments of the invention aim to avoid overregulating the system, or initiating regulation too quickly, as this causes wear and tear on appliances and increase data transmission requirements. Instead, embodiments of the invention look to find ways to ignore or dismiss small and/or inconsequential peaks or changes in demand, such that they do not trigger regulation. This is achieved by using a deliberately imperfect, self-tuning proportional-derivative (PD) regulator with filtered inputs, which requires minimal configuration and user interaction. The definition of peak consumption can be found automatically so that no external signal identifying times or occurrences of peaks is needed. Embodiments of the invention can also learn an approximation of the actual effect of regulating appliances automatically and, by doing so, further minimises the configuration needed and further strengthen the regulation algorithm. This is done by delivering a feed forward signal to the regulator, representing regulation or un-regulation of a load or loads.

Throughout this specification, regulation of a load (otherwise interchangeably referred to as a device and/or an appliance) refers to the cessation or reduction of electrical power provided to that load. Un-regulation has the inverse meaning, referring to the resumption of electrical power provided. Un-regulation could, in some circumstances, relate to an increase and/or a decrease in electrical power provided. Regulation is used to avoid overconsumption and controlled by the regulation algorithm(s) described herein.

Overconsumption occurs when electrical power demand exceeds a power consumption limit. In embodiments of the invention, the power consumption limit is determined using algorithms and historical power consumption data. However, in alternative embodiments of the invention, the power consumption limit can be influenced by external signals, and/or factors such as tariff costs.

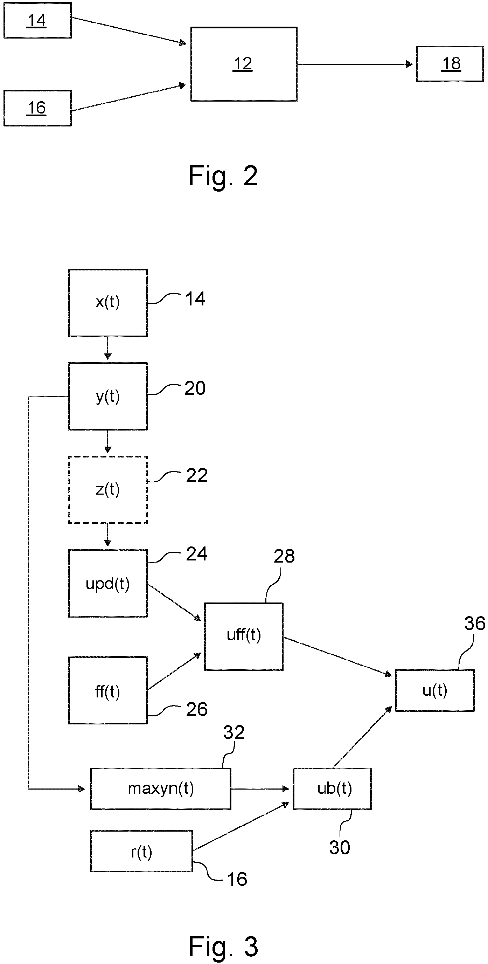

Figure 2 shows a flow chart which provides a general overview of how, in one embodiment, the invention estimates the occurrence of overconsumption. From this, the system will decide whether or not, and when, to trigger regulation of one or more appliances.

The method described calculates an estimation of future consumption on a short timeline, the duration of which could be selected to coincide with an electrical tariff pricing period. For example, if the pricing period is one hour then a one hour tuning period might be appropriate. A new power consumption measurement could be received at regular intervals within that tuning period; say, every minute. In the following description, embodiments of the invention will be described in this context - that is, operating over a one hour tuning period and receiving new power consumption measurements every minute. However, it will be appreciated that either or both of these time periods can be altered depending on various factors.

The general process 12 is undertaken by software which is programmed to run various algorithms, as will become clear in the following description. The process 12 has two main inputs, these being: regular power consumption measurements 14 and a power consumption limit 16. From these inputs, the process 12 estimates the available capacity for electrical power consumption 18. Where there is capacity (i.e. where the output is a positive value), this means that overconsumption is not expected to occur. On the other hand, a negative output from the process indicates the expected occurrence of overconsumption. The system reacts by triggering the start of regulation. By iteratively running the algorithm on the reception of each new power measurement, the available capacity is continuously monitored, including throughout regulation. Should sufficient capacity become available, the algorithm can trigger un-regulation of one or more appliances.

Figure 3 is a schematic flow diagram showing generally how the algorithm processes the input 14 of regular power consumption measurements to produce an estimation of future electrical power consumption (sometimes referred to as the estimated future electrical power consumption value). Throughout this description, the following definitions are used:

x(t) = regular power consumption measurements (W);
r(t) = the power consumption limit (W);
h(t) = available capacity for electrical power consumption (W);
y(t) = power consumption average over a tuning period duration (W);
z(t) = exponentially smoothed power consumption average (W);
ff(t) = feed forward value (W);
upd(t) = PD value, initial estimate of future consumption (W);
uff(t) = PD value, initial estimate of future consumption accounting for known changes (W);
ub(t) = upper bound value (W);
$y_n(t)$ = power consumption average for a period of time shorter than the tuning period, of n duration (W); and
u(t) = estimate of future consumption accounting for known changes and incorporating the upper bound (W);

A single iteration of the process will be described for simplicity. Again, the following example uses a tuning period of one hour comprising 60 measurements (one per minute).

The process starts by gathering regular power consumption measurements x(t). After a power consumption measurement x(t) has been obtained, it is processed through an averaging filter and the average power consumption for the last hour y(t) - the tuning period in this case - is calculated at 20.

In a next step 24, the PD regulator is used to calculate a PD value upd(t) from the filtered input y(t).

The optional step 22 (shown in dashed lines) of applying an exponential smoothing filter - i.e. calculating an exponentially smoothed value z(t) of the average y(t) - can be performed after the average y(t) is determined and prior to calculation of the PD value upd(t) (i.e. between steps 20 and 24). The following formula for calculating the exponentially smoothed value is used, according to an embodiment of the invention:

$$z(t) = z(t-1) * (1 - 0.05) + y(t) * 0.05 = z(t-1) * 0.95 + y(t) * 0.05$$

where:

z(t-1) = the exponentially smoothed value from the previous iteration of the calculation (W).

By performing exponential smoothing, rapid changes in the average y(t) are dampened. As a result, only trends will pass through the exponential smoothing filter. This step is therefore useful as it reduces reading oscillations which would otherwise have the potential to be amplified in the next stage, when the PD value is calculated, and thereby mitigates the occurrence of the false triggering of regulation.

Where an exponential smoothing filter is applied, the PD regulator is used to calculate a PD value upd(t) from the filtered input z(t). According to an embodiment of the invention, this is done by using the following formula:

$$upd(t) = z(t) + K_d * z'(t)$$

where:

$K_d$ = the derivative gain; and

$$z'(t) = \text{the derivative of } z(t) = (z(t) - z(t-1)) * \text{the number of seconds per interval}$$

A feed forward value ff(t) is determined at step 26. The feed forward value is reflective of known and/or expected changes in future consumption, typically due to the regulation or un-regulation of one or more appliances in the system. Therefore, determining the feed forward value comprises summing the known (or estimated) power changes that the system will experience when one or more of the appliances within the system are turned on, off, up or down. A record of these known or expected changes is kept by the system and is referred to when determining the feed forward value. The feed forward value is based on a simple addition or subtraction of the known and/or expected changes in power consumption resulting from a change in status of one or more system appliances.

By generating a feed forward value in this way, the algorithm can pre-empt these changes and react quickly by not having to wait for the changes in consumption to actually occur, be recorded as measurements and pass through the averaging and exponential smoothing filters. The feed forward value is exponentially decayed by a time constant, meaning that as the measurements resulting from the change do appear in time through the filters, the feed forward value fades out; in this sense, the feed forward value cross-fades with the actual measured effect of the change. This helps to remove errors from non-exact estimations of a change, reducing the accuracy required for such estimations.

As described above, the feed forward value is equal to the known or estimated change in consumption due to the regulation or un-regulation of one or more loads at a given time, and will either be a positive value for an overall increase in consumption or a negative value for an overall decrease in consumption. According to an embodiment of the invention, the exponentially decayed feed forward value is calculated using the following formula:

$$ff(t) = ff(t\text{-}1) * 0.095$$

where:

$$ff(t\text{-}1) = \text{the feed forward value from the previous iteration of the calculation (W).}$$

The PD value upd(t) and the feed forward value ff(t) are combined in step 28 to produce a PD value which accounts for the known or expected changes captured by the feed forward value ff(t), uff(t).

It will be appreciated that although the foregoing description describes deriving an indicative electrical power consumption value corresponding to the tuning period from the electrical power consumption measurements by passing the measurements through an averaging filter to calculate the average power consumption over the tuning period, the electrical power consumption measurements may be processed in any way which produces a value or values which represent an indicative electrical power consumption value corresponding to the tuning period. For example, instead of passing the measurements through an averaging filter, other kinds of processing, filtering and/or calculations - or a combination of these - could be applied to the measurements to produce a filtered input for the PD regulator. Types of filtering, processing and/or calculations include, but are not limited to exponential filtering, the calculation of percentiles and/or the calculation of weighted average(s). As such, the step of applying an exponential smoothing filter may be one of calculating an exponentially smoothed value z(t) of the somehow processed/filtered/calculated electrical power consumption measurements which, as described, dampens , rapid changes in the processed/filtered value(s).

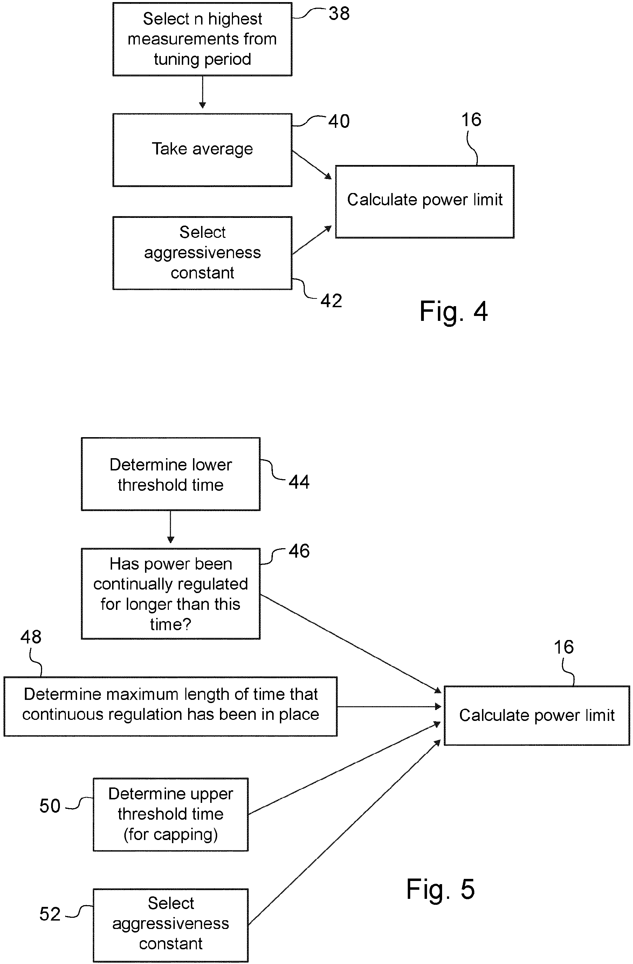

Next, at step 30, an upper bound value ub(t) is determined. This value is the maximum out of two different values: the power consumption limit 16 (determination of which is described in more detail below with reference to Figures 4 and 5) or the highest average power consumption measurement during the last tuning period, for periods of time shorter than the tuning period $y_n(t)$ 32, where n is the time duration of the period having the highest average.

As an example of how to find the highest $y_n(t)$, we will consider a tuning period of one hour. The average power consumption over the entire tuning period is y(t), as is described above. This is equivalent to $y_{60}(t)$, as there are 60 minutes in one hour. To find the upper bound value, the algorithm will calculate the average for the last 59 minutes $y_{59}(t)$, the last 58 minutes $y_{58}(t)$, the last 57 minutes $y_{57}(t)$ and so on. This could be done until the last 30 minutes $y_{30}(t)$; however, it will be appreciated that the stopping point can be adjusted as required. The highest $y_n(t)$ value 32 is that which will be compared against the power consumption limit r(t) 16 in the step of determining the upper bound value ub(t) 30. According to an embodiment of the invention, the upper bound value can therefore be found as follows:

$$ub(t) = \text{maximum } (r(t), \ y_n(t))$$

In a final step 36, the algorithm calculates the final estimate of future consumption u(t), accounting for known and/or expected changes and incorporating the upper bound value. u(t) is selected to be the minimum out of two different values: the PD value accounting for known changes uff(t) or the upper bounded value ub(t). By calculating the final estimate of future consumption u(t) in this way, short periods of high consumption are permitted without triggering power regulation, and thus avoiding wear and tear on appliances as well as saving on data transfer requirements. According to an embodiment of the invention, the final estimate of future consumption u(t), accounting for known and/or expected changes and incorporating the upper bound value can be found as follows:

$$u(t) = \text{minimum } (uff(t), ub(t))$$

The second input into the process 12 (see Figure 1) - the power consumption limit 16 - can be determined in a number of ways. Figures 4 and 5 are schematic flow diagrams showing two alternative ways in which the power consumption limit r(t) can be determined.

Starting with the Figure 4 method, the first step 38 in calculating the power consumption limit is to select a number, n, of the highest power consumption measurements x(t) recorded over a period of time. The period of time should be long enough for the algorithm to determine what levels of consumption can be considered normal (or regular) for the system and could be in the order of weeks. An example period of time could be 4 weeks. This method should allow a small amount of estimated power consumption measurements to surpass the limit, reducing unnecessary regulation. Say, for example, 5 of the highest measurements are selected.

The next step 40 is to take the average of these measurements. An aggressiveness constant is set in step 42, which is equivalent to the extremeness of the regulation required. A high aggressiveness constant is equivalent to more aggressive regulation, and ultimately will result in lower peak power consumption allowances. However, selecting a high aggressiveness constant may sacrifice the comfort or convenience for end users. Conversely, a low aggressiveness constant is equivalent to less aggressive regulation, and ultimately will result in higher peak power consumption allowances, meaning perhaps a more comfortable and convenient environment for end users.

To calculate the power consumption limit r(t) 16, the average calculated in step 40 is divided by the aggressiveness constant.

An alternative method shown in Figure 5 includes setting or referring to upper and lower threshold times. We begin, at step 44, by determining the lower threshold time. This is the time over which, if continuous regulation of appliances within a system has been in place for its duration, a new revised power limit will be calculated. The time could be, for example, 3 hours. At step 46 the algorithm checks whether continuous regulation of appliances has been in place for 3 hours or more. If so, a new power limit will be calculated.

At step 48, the algorithm determines how long continuous regulation has been in place. The algorithm will also perform the step of determining the upper threshold time, step 50. The continuous regulation period of time determined in step 48 will be capped at the upper threshold time.

In step 52, an aggressiveness constant is determined in a similar way to that of step 42, described with reference to Figure 4.

Following the outcome of steps 44, 46, 48, and 52 the algorithm calculates a value which is proportional to the time in which power regulation has been ongoing continuously. According to an embodiment of the invention, this can be found using the following formula:

$$\text{Value proportional to the longest continually regulated time} =$$
$$\text{aggressiveness constant} * (\text{time in which power regulation has been ongoing}$$
$$\text{continuously (capped at the upper threshold value)} - \text{the lower threshold value})$$

To calculate the new power consumption limit r(t) 16, the previous power consumption limit is multiplied by the value proportional to the longest continually regulated time. This method is intended to determine if the process is incorrectly classifying longer (perhaps expected) periods of high power consumption as peaks, which should instead be considered as normal, non-peak consumption, and addresses this occurrence.

In an alternative method of determining the power consumption limit r(t), the methods described with reference to Figures 4 and 5 can each be performed and compared with one another, with the final power limit r(t) being selected as the highest resulting from each of the two methods.

The algorithms described above for determining the power limit can be set to run periodically, for example every week, and/or if continuous regulation has been in place for a certain amount of time. However, it will be appreciated that the regulation methods and systems described herein can operate with the provision of any power limit, not limited to power limits determined using the above-described methods. Alternative algorithms for determining the power limit may be used and/or the power limit may be provided by external data which could, for example, be transmitted to the system via a signal. In such cases, the power limit could be set by a user, a government, a jurisdiction or an energy provider or manager.

Following processing of the inputs, as described in Figures 3, 4 and 5, the process 12 (see Figure 1) generates an output 18, which is the available capacity for electrical power consumption h(t). According to an embodiment of the invention, the available capacity for electrical power consumption is generally found using the following formula:

$$h(t) = r(t) - u(t)$$

As described above, if the capacity h(t) is greater than zero (i.e. positive), then capacity exists and system regulation is not currently required. However, if the capacity h(t) is less than zero (i.e. negative) then power regulation techniques should be employed.

Appliances within the system which are regulatable are recorded. For example, an appliance such as a room heater might be recorded as regulatable, as this is not a safety critical or essential device. On the other hand, an appliance such as a life support machine could fall into the not regulatable category. This selection could be made by a system user.

In addition to categorising the appliances as regulatable and not regulatable, the regulatable appliances are also assigned priorities and ranked based on these priorities. Where it is less desirable to regulate a regulatable load, it is assigned a high priority. This might apply to appliances such as water heaters hot water tanks, for which reducing or stopping power supply would be inconvenient to the user. Where it is more desirable to regulate certain loads, such as the heating in a corridor or a lesser used room, these appliances are assigned low priorities. Similarly, this selection could be made by a system user.

In an embodiment of the invention, the method includes keeping a record of the estimated power change expected due to the regulation and un-regulation of each of the regulatable loads. These estimates could change or be updated over time. Factors such as seasonal variations in heating or cooling could change the estimates. In addition, the regulation and un-regulation estimates for a certain appliance may not be the same opposing values, as might be expected. The un-regulated power change estimate for an appliance might be greater than the regulated power change estimate, which might be the case if the appliance has accumulated an energy deficit and is expected to consume full power for a period of time following un-regulation.

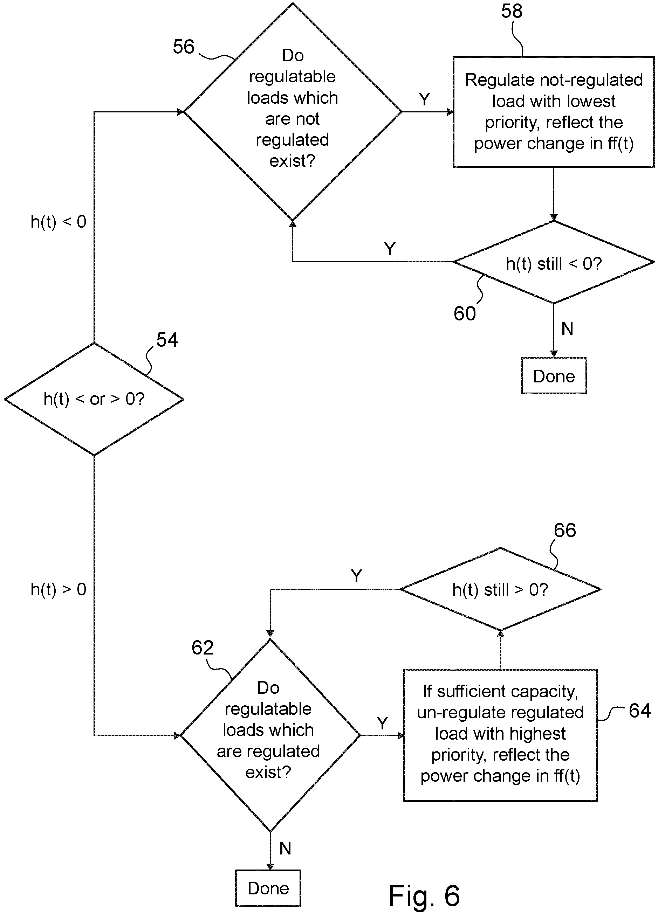

Figure 6 is a flow chart which shows how the process selects loads to regulate or un-regulate based on the outcome of the regulation algorithm. The first step taken at 54 is to review whether the estimated capacity for electrical power consumption h(t) is less than zero (i.e. negative) or greater than zero (i.e. positive).

In a scenario in which the capacity for electrical power consumption h(t) is less than zero, the process must decide whether to regulate a load. As such, the next step 56 is to determine whether un-regulated regulatable loads exist in the system. Reference is made to a record of regulatable loads kept by the system and their status. If un-regulated regulatable loads do exist, then action 58 is taken to regulate these loads, beginning with those which are lowest in priority. The feed forward value ff(t) described above can be updated to reflect this known change in consumption.

The next step in the process 60 is to review the estimated capacity for electrical power again. If the capacity is still less than zero, the steps are repeated until the estimated capacity for electrical power consumption h(t) is no longer less than zero. When this happens, the process is complete (for now). At some point in the future the process will begin again and may act to un-regulate loads if there is available capacity.

In a scenario in which the capacity for electrical power consumption h(t) is greater than zero, and where the system contains loads which have been regulated, it might be possible to un-regulate some or all of these loads. As such, step 62 checks whether the system comprises regulatable loads which are currently being regulated. If it does, an action is taken at 64 to un-regulate the loads in priority order - starting with the highest first - if the capacity h(t) is sufficiently to cover the recorded estimated change for un-regulation of that load. Again, the feed forward value ff(t) described above can be updated to reflect this known change in consumption.

The next step in the process 66 is to review the estimated capacity for electrical power again. If the capacity is still greater than zero, the steps are repeated until the capacity for electrical power consumption h(t) is positive and no loads within the system are regulated. When this happens, the process is complete (for now). At some point in the future the process will be repeated.

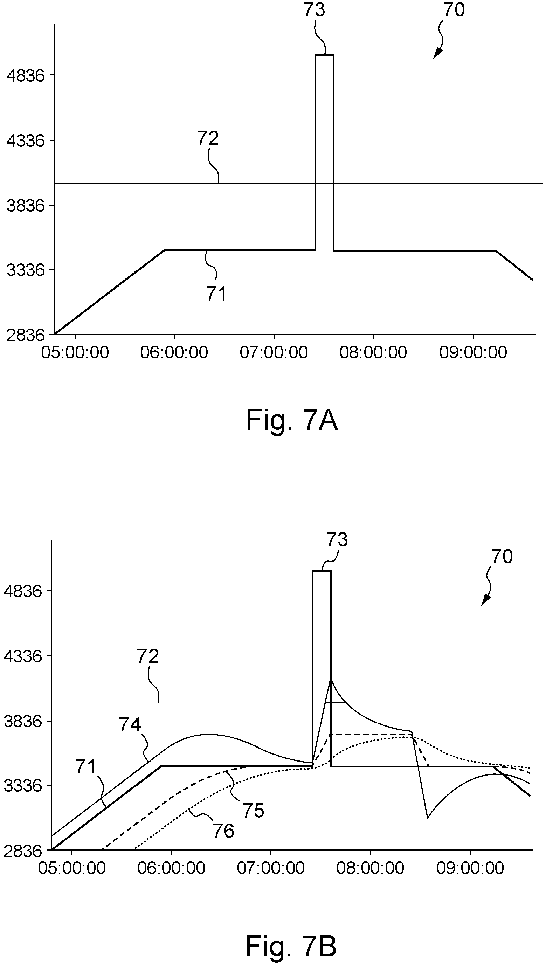

With reference to Figures 7A and 7B, it is shown how, in an embodiment of the invention, the system avoids implementing regulation when short peaks of power consumption occur.

A plot 70 of a systems electrical power consumption is shown in Figure 7A. The x-axis represents time and the y-axis represents power consumption. Without the system algorithm running, power consumption measurements 71 exceed the power consumption limit 72. In a more basic approach that does not employ the system algorithm, devices within the system are regulated as a result. When devices are regulated as a consequence of very short peaks, like the 10 minute long peak 73 shown in Figure 7A, they are caused to frequently oscillate between their regulated and un-regulated states, causing wear and tear on the devices and ultimately resulting in their premature degradation and failure.

By employing regulation algorithms, the system can determine whether a peak is short enough to avoid triggering device regulation. The plot 70 of Figure 7B is the same as the plot of Figure 7A but additionally shows values calculated by the system algorithm. An average y(t) is taken of the power consumption measurements 71, and the average y(t) 75 is exponentially smoothed z(t) 76. The resulting estimate of future consumption u(t) 74 calculated by the algorithm does not surpass the power consumption limit 72. Therefore, the system algorithm determines that there is no need to trigger regulation as a result of the 10 minute peak 73.

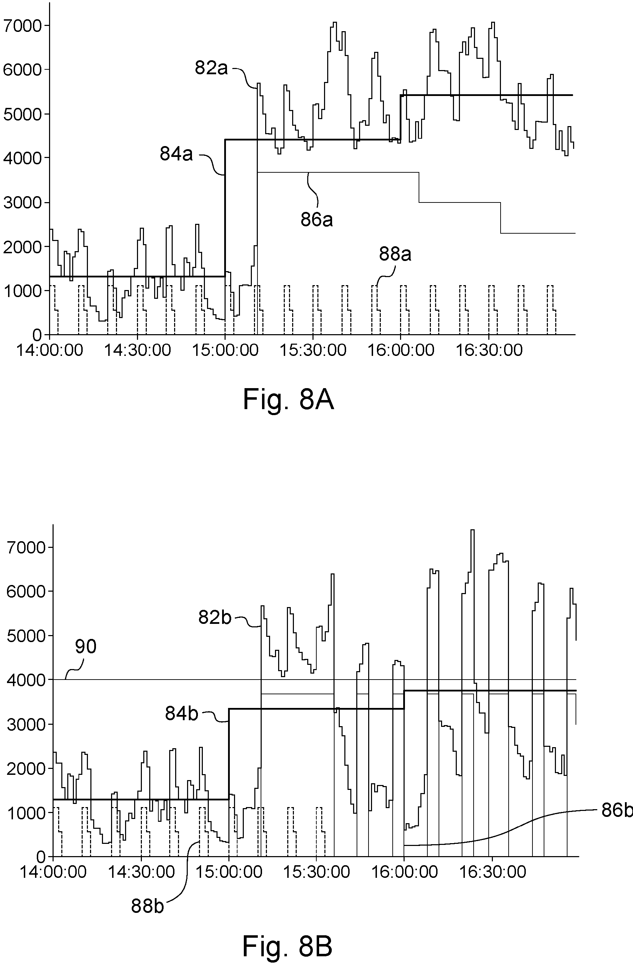

The plots of Figures 8A and 8B provide a comparison between an unregulated system and a regulated system according to the implementation of an embodiment of the invention. In each plot the x-axis represents time and the y-axis represents power consumption in Watts (W). Each plot shows power consumption measurements 82a, 82b, average hourly power consumption 84a, 84b, the power consumption of a charging electric vehicle 86a, 86b and the power consumption of a heated floor 88a, 88b.

In the unregulated system of Figure 8A, an electric vehicle 86a is plugged into a user's domestic charger and begins to consume power at around 15:12. This increases the average hourly power consumption 84a for the hour between 15:00 and 16:00 up to around 4400W. In the next hour between 16:00 and 17:00, the electric vehicle 86a is on charge for the entire hour. As such, the average hourly power consumption 84a is higher, yet again. The electric vehicle's consumption 86a begins to step down during this hour as the charging speed slows as a result of the battery becoming full. Although the charger is stepping down, the average hourly consumption 84a remains higher between 16:00 and 17:00 because of other power consumption within the household (for example, cooking). A heated floor 88a is pulsed on and off throughout the duration spanned by the plot.

In the unregulated system of Figure 8B, a power consumption limit 90 of 4000W has been set. Employing its regulation algorithm, the system regulates the heated floor 88b by shutting it off at around 15:34. The heated floor 88b remains off for the rest of the duration spanned by the plot. Shortly afterwards, at around 15:36, the system regulates the charging electric vehicle 86b. To regulate the electric vehicle 86b, the system reduces the consumption of the charging electric vehicle 86b by pausing charging for periods of time; the charging is not stopped completely. Between 15:36 and 16:30, the electric vehicle charger 86b is regulated by reducing its consumption to a 33% duty cycle. At approximately 16:30, there is a brief period during which there is more room for consumption and regulation of the electric vehicle charger 86b is reduced, by increasing its consumption to a 66% duty cycle. After this, regulation at a 33% duty cycle is re-imposed. Throughout the duration of the plot, the regulation algorithm employed by the system keeps the hourly average below the 4000W power limit.

According to an unillustrated embodiment, an embodiment of the invention is also concerned with shifting power consumption to shortly before the occurrence of a peak in electrical power demand or a high pricing period, and subsequently reducing consumption just before or at the time that the peak or high pricing period begins. The extra energy consumed just before the start of this period should maintain the desired effect throughout the duration of the peak or high pricing period, despite the reduced consumption throughout this time. For example, a water tank could be heated to a higher temperature than usual immediately before the start of a high tariff period. When the high tariff period begins, the water heater is shut off to avoid consuming electrical power during this time and save funds; however, the residual heat stored by the water following excessive heating prior to the high tariff period keeps it hot throughout this time.

Embodiments of the invention may encompass a system which may include one or more of the following features: a meter, a processor, a database, a data storage and/or processing unit, a computer, a communication protocol, a wireless network, the cloud, an energy controller, an electricity meter, a wireless gateway, a regulatable device, a user interface device and an Application Programming Interface (API). The features listen may communicate with one another and may be configured to send data and/or control signals to one another.

Although specific formulas, values and durations have been referred to throughout the foregoing description, it will be appreciated that alternative or modified formulas and values may be used within the scope of the invention.

The methods disclosed herein aim to reduce electrical power consumption by smoothing consumption out closer to an average level. The regulator is self-tuning, which means that it requires minimal user configuration, interaction and monitoring. The regulator can also be used across various buildings and installations independently. In addition, by using methods to automatically set the power limit, no external signal or input is required. The methods can be used to shift load peaks in order to avoid the occurrences of blackouts or brownouts, but without needlessly over regulating appliances which would cause wear and tear. For example, aspects of the invention relate to how surges in consumption which exceed the power consumption limit, but which have a very short duration - such as boiling a pan of water for 30 seconds - are filtered out so as not to trigger regulation. "Ignoring" short variations in this way avoids the false detection of peaks, where those peaks (or surges) are much shorter than the time period in question. This avoids such wear and tear on the equipment and also makes cost savings; for example, due to reduced data traffic.

The nature of the methods disclosed herein renders them applicable to a wide variety of systems, without the requirement for learning about the system in question or employing machine learning techniques, which would be undesirable due to the requirement to simulate models and run learning periods. The methods disclosed do not attempt to undertake machine learning or develop complicated models or simulations of the systems to be regulated, but instead use key parameter estimates of the systems in question which make it possible to employ the methods to a wide range of systems without the need for arduous configuration, in a pragmatic, standardised approach.

The invention provides a method of and system for regulating electrical power consumption of a system comprising one or more regulatable loads. The method comprises estimating a future electrical power consumption value by: obtaining electrical power consumption measurements from a plurality of time intervals over a tuning period; deriving an indicative electrical power consumption value corresponding to the tuning period from the electrical power consumption measurements; and calculating a proportional and derivative value of the indicative electrical power consumption value. An available capacity for electrical power consumption is determined using the future electrical power consumption value and an electrical power consumption limit. A control signal for controlling the one or more regulatable loads to regulate electrical power consumption of the system is generated. A system for regulating electrical power consumption of a location comprises a data processing unit configured send a control signal to a local controller to control the one or more regulatable loads to regulate electrical power consumption of the location.

Various modifications to the above-described embodiments may be made within the scope of the invention, and the invention extends to combinations of features other than those expressly claimed herein.

**Claims**

1. A method for regulating electrical power consumption of a system comprising one or more regulatable loads, the method comprising:

   estimating a future electrical power consumption value by:

   a) receiving electrical power consumption measurements from a plurality of time intervals over a tuning period;
   b) deriving an indicative electrical power consumption value corresponding to the tuning period from the electrical power consumption measurements; and
   c) calculating a proportional and derivative value of the indicative electrical power consumption value;

   determining an available capacity for electrical power consumption using the future electrical power consumption value and an electrical power consumption limit; and
   generating a control signal for controlling the one or more regulatable loads to regulate electrical power consumption of the system.

2. The method according to claim 1, comprising receiving the control signal in a local controller and operating the local controller to control the one or more regulatable loads to regulate electrical power consumption of the system in response to the signal.

3. The method according to claim 1 or claim 2, comprising estimating a first future electrical power consumption value at a first time $T_1$, by receiving electrical power consumption measurements from a plurality of time intervals over a first tuning period, and estimating a second future electrical power consumption value at a time $T_2$, later than the time $T_1$, by obtaining electrical power consumption measurements from a plurality of time intervals over a second tuning period.

4. The method according to any preceding claim, comprising keeping a record of regulatable loads including load regulation and un-regulation values for each of the regulatable loads.

5. The method according to any preceding claim, wherein a negative value for the capacity for electrical power consumption indicates that the value representative of future electrical power consumption exceeds the electrical power consumption limit and wherein the method comprises identifying regulatable loads which are not yet regulated and generating a control signal for controlling one or more of the identified regulatable loads.

6. The method according to any preceding claim, comprising determining the time at which a negative capacity for electrical power consumption is expected to occur and increasing the electrical power consumption of one or more of the regulatable loads prior to the expected occurrence of the negative capacity for electrical power consumption.

7. The method according to any preceding claim, comprising exponentially smoothing the indicative electrical power consumption value determined in step b) such that step c) comprises calculating the proportional derivative value of the exponentially smoothed indicative electrical power consumption value.

8. The method according to any preceding claim, comprising generating a feed forward value which is a value that is indicative of known and/or expected changes in future consumption due to the regulation of one or more loads.

9. The method according to claim 8, comprising exponentially decaying the feed forward value.

10. The method according to claim 8 or claim 9, comprising combining the proportional and derivative value calculated at step c) with the feed forward value to reflect known and/or expected changes in future consumption in the proportional and derivative value.

11. The method according to any preceding claim, comprising determining an upper bound value by:

    calculating multiple sliding averages of the electrical power consumption measurements for periods of time shorter than the tuning period;
    selecting the highest of the multiple sliding averages; and

selecting the maximum of the electrical power consumption limit and the highest of the multiple sliding averages.

**12.** The method according to claim 11 when dependent on claim 10, comprising selecting the minimum of the proportional and derivative value reflecting known and/or expected changes in future consumption determined in claim 10 and the upper bound value determined in claim 11 to determine the estimated future electrical power consumption value.

**13.** A system for regulating electrical power consumption of a location comprising one or more regulatable loads, the system comprising:

a data processing unit configured to:

estimate a future electrical power consumption value by:

a) receiving electrical power consumption measurements of the location from a plurality of time intervals over a tuning period;
b) deriving an indicative electrical power consumption value corresponding to the tuning period from the electrical power consumption measurements; and
c) calculating a proportional and derivative value of the indicative electrical power consumption value;

determine the available capacity for electrical power consumption of the location using the future electrical power consumption value and an electrical power
consumption limit; and
send a control signal to a local controller to control the one or more regulatable loads to regulate electrical power consumption of the location.

**14.** The system according to claim 13, wherein the system comprises the local controller and wherein the local controller is operable to receive the control signal from the data processing unit and control the one or more regulatable loads in response to the control signal.

**15.** The system according to claim 13 or claim 14, further comprising a user interface device for a system user to monitor and/or control the system's analysis, decisions and/or outcomes.

Fig. 1

Fig. 2

Fig. 3

Fig. 4

Fig. 5

Fig. 6

Fig. 7A

Fig. 7B

Fig. 8A

Fig. 8B

Europäisches
Patentamt

European
Patent Office

Office européen
des brevets

# EUROPEAN SEARCH REPORT

Application Number

EP 21 27 5160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2012 228041 A (NTT FACILITIES INC) 15 November 2012 (2012-11-15) * the whole document * | 1-15 | INV. H02J3/00 H02J3/14 |
| A | GIUSEPPE TOMMASO COSTANZO ET AL: "A System Architecture for Autonomous Demand Side Load Management in Smart Buildings", IEEE TRANSACTIONS ON SMART GRID, IEEE, USA, vol. 3, no. 4, 1 December 2012 (2012-12-01), pages 2157-2165, XP011484191, ISSN: 1949-3053, DOI: 10.1109/TSG.2012.2217358 * Sections I,II, IV, V * | 1-15 | |
| A | EP 3 499 671 A1 (DOOSAN HEAVY IND & CONSTRUCTION CO LTD [KR]) 19 June 2019 (2019-06-19) * paragraphs [0002], [0005]; claim 1; figures 1,4,5 * | 1-15 | TECHNICAL FIELDS SEARCHED (IPC) |
| A | JP H09 9502 A (MITSUBISHI ELECTRIC CORP) 10 January 1997 (1997-01-10) * the whole document * | 1-15 | H02J |

The present search report has been drawn up for all claims

| Place of search | Date of completion of the search | Examiner |
|---|---|---|
| Munich | 8 April 2022 | Chaumeron, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 27 5160

08-04-2022

| Patent document cited in search report | | Publication date | Patent family member(s) | | Publication date |
|---|---|---|---|---|---|
| JP 2012228041 | A | 15-11-2012 | JP | 5848883 B2 | 27-01-2016 |
| | | | JP | 2012228041 A | 15-11-2012 |
| EP 3499671 | A1 | 19-06-2019 | CN | 109934374 A | 25-06-2019 |
| | | | EP | 3499671 A1 | 19-06-2019 |
| | | | JP | 6677396 B2 | 08-04-2020 |
| | | | JP | 2019110740 A | 04-07-2019 |
| | | | KR | 20190088083 A | 26-07-2019 |
| | | | US | 2019187193 A1 | 20-06-2019 |
| JP H099502 | A | 10-01-1997 | NONE | | |

EPO FORM P0459

**EP 4 009 465 A1**

**Patent documents cited in the description**

- US 8494685 B